Europäisches Patentamt

European Patent Office

Office européen des brevets

(19)

(11) **EP 0 647 311 B1**

(12)

# FASCICULE DE BREVET EUROPEEN

(45) Date de publication et mention
de la délivrance du brevet:
**23.04.1997 Bulletin 1997/17**

(21) Numéro de dépôt: **93904084.6**

(22) Date de dépôt: **14.01.1993**

(51) Int Cl.6: **G01C 19/72**

(86) Numéro de dépôt international:
**PCT/FR93/00038**

**WO 93/14378 (22.07.1993 Gazette 1993/18)**

(54) **GYROMETRE OPTIQUE A EFFET SAGNAC EN STRUCTURE COMPLETEMENT INTEGREE**

VÖLLIG INTEGRIERTER OPTISCHER KREISEL VON SAGNAC TYP

SAGNAC EFFECT OPTICAL GYROMETER HAVING A FULLY INTEGRATED STRUCTURE

(84) Etats contractants désignés:
**DE GB IT**

(30) Priorité: **17.01.1992 FR 9200467**

(43) Date de publication de la demande:
**12.04.1995 Bulletin 1995/15**

(73) Titulaire: **COMMISSARIAT A L'ENERGIE
ATOMIQUE
75015 Paris (FR)**

(72) Inventeur: **VALETTE, Serge
F-38100 Grenoble (FR)**

(74) Mandataire: **Signore, Robert et al
c/o BREVATOME
25, rue de Ponthieu
75008 Paris (FR)**

(56) Documents cités:
**GB-A- 2 223 860**

- **OPTICAL FIBER SENSORS, vol. 2, no. 2, 27
  janvier 1988, Washington DC, US, pp. 385-392;
  W.J. MINFORD et al.: 'Interferometric fiber optic
  gyroscope using a novel 3X3 integrated optic
  polariser/splitter'**
- **PATENT ABSTRACTS OF JAPAN, vol. 13, no.
  277 (E-778) 26 juin 1989; & JP-A-10 064 283**
- **PATENT ABSTRACTS OF JAPAN, vol. 12, no.
  123 (P-690) 16 avril 1988; & JP-A-62 247 209**

## Description

La présente invention a pour objet un gyromètre optique à effet Sagnac, appareil dont le principe physique repose sur un effet relativiste découvert en 1913 par le physicien Sagnac.

Les gyromètres optiques sont maintenant bien connus et on en trouvera par exemple une description aux pages 91 et suivantes du Journal of Light Wave Technology, Vol. Lt. 2, n° 2, Avril 1984.

On rappellera la théorie connue et les principales évolutions de ce genre d'appareil en se référant aux figures la et 2a ci-jointes.

La sonde proprement dite d'un gyromètre optique à effet Sagnac comporte un anneau ou spire 1 parcouru par de la lumière et dont les deux extrémités ont un tronçon commun 2 qui les relie respectivement à une source lumineuse 3 et à un détecteur d'interférences 4. Cette disposition géométrique permet, lorsque de la lumière en provenance de la source 3 est injectée au travers du trajet commun 2 dans l'anneau 1, de réaliser une division de celle-ci qui se sépare en deux ondes lumineuses distinctes dont la première, "a", parcourt l'anneau 1 dans le sens d'une aiguille d'une montre et la deuxième, "b", parcourt ce même anneau dans le sens inverse, ces deux ondes étant par définition en phase puisqu'elles proviennent de la même source 3. A la sortie du système, le détecteur 4 permet d'observer d'éventuelles franges d'interférences qui résultent de la combinaison des ondes "a" et des ondes "b" précédentes. Par construction et en l'absence de toute autre action, les interférences entre les ondes "a" et les ondes "b" sont parfaitement constructives et correspondent à un déphasage strictement nul $\Delta\varphi = 0$.

Si en revanche, le dispositif est en rotation avec une vitesse angulaire $\vec{\Omega}$ par rapport à un repère inertiel, l'onde qui parcourt l'anneau dans le sens de la rotation acquiert une avance de phase $\Delta\varphi$ au cours de son parcours, alors que l'autre acquiert au contraire un retard de phase $-\Delta\varphi$. IL en résulte donc à la sortie un déphasage total d'ampleur $2\Delta\varphi$ qui modifie la figure d'interférence lue par le détecteur 4. Comme la théorie de l'appareil montre que la valeur du déphasage $\Delta\varphi$ est proportionnelle au produit vectoriel $\vec{A} \wedge \vec{\Omega}$ dans lequel $\vec{A}$ est un vecteur dont le module est proportionnel à la surface de l'anneau et dont la direction est perpendiculaire au plan de ce même anneau et $\Omega$ est le vecteur de la rotation angulaire que l'on souhaite mesurer, on conçoit que la mesure du déphasage total $\Delta\varphi$ effectué par l'étude de la modification de la figure d'interférence précédente permet d'obtenir la valeur de la rotation $\vec{\Omega}$ recherchée.

Des appareils de mesure d'une rotation absolue construits sur ce principe se sont évidemment développés tout particulièrement depuis l'apparition d'une part des sources lumineuses laser et d'autre part des fibres optiques de conduction de la lumière.

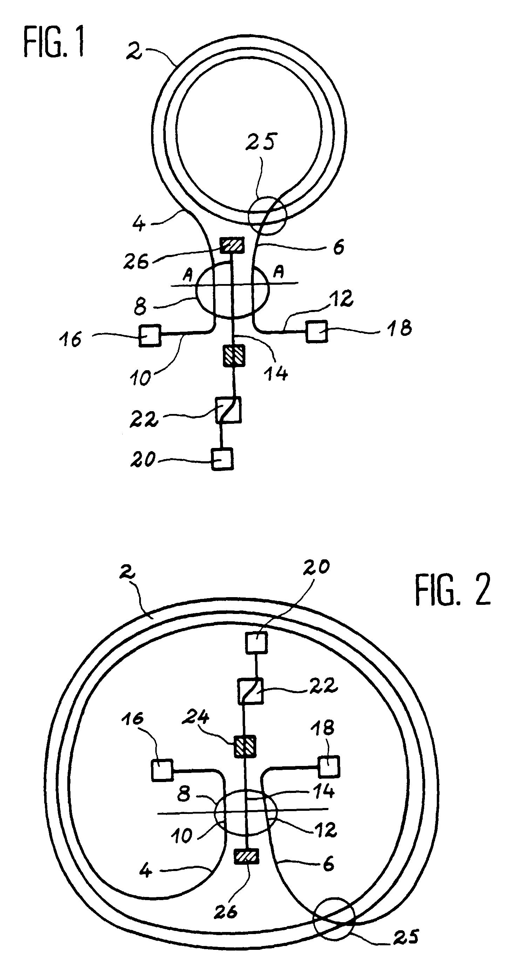

La sensibilité d'un gyromètre optique de Sagnac étant proportionnelle à la longueur du parcours de l'onde lumineuse, on a tout naturellement cherché à rallonger ce parcours ce qui était spécialement facile avec les fibres optiques et on a réalisé ainsi des gyromètres dont la sonde détectrice était composée d'une bobine de fibres optiques de plusieurs tours. Plus récemment on a également envisagé une réalisation des gyromètres optiques en faisant appel à l'optique intégrée et pour augmenter artificiellement la longueur de la spire unique constituée d'un microguide de lumière, on a utilisé le gyromètre résonnant dont un exemple est représenté schématiquement sur la figure 2a.

Sur cette figure 2a se trouve l'anneau résonnant 1 constitué d'un microguide optique qui est alimenté tangentiellement par deux guides de lumière 5 et 6 comportant chacun une face d'entrée 7 et une face de sortie 8, les guides de lumière 5 et 6 étant couplés à l'anneau résonnant 1 à l'aide de deux coupleurs optiques 9 et 10. Le principe de cet appareil connu consiste à augmenter le trajet des deux ondes lumineuses en permettant à la lumière de parcourir plusieurs fois l'anneau et en examinant les interférences résultant de l'état des deux ondes après plusieurs parcours de cette nature. Les performances d'un tel dispositif dépendent par conséquent du nombre de tours qui peuvent être parcourus par les ondes lumineuses sans que l'affaiblissement de celles-ci consécutif aux pertes de propagation soit trop important. Les inconvénients de cet appareil résident dans la nécessité d'utiliser comme source lumineuse un laser ayant une grande longueur de cohérence, ce qui implique d'utiliser un laser monomode longitudinal capable d'émettre de La lumière sous cette forme, et ce dans une grande gamme de températures pour certaines applications particulières du dispositif. Ceci est déjà d'une réalisation délicate. De plus, le principe de l'appareil nécessite de pouvoir surveiller avec précision la longueur d'onde $\lambda_o$ de la lumière qui correspond à la résonnance dans l'anneau et ceci n'est pas non plus facile à réaliser à l'aide de traitements électroniques simples, car la longueur d'onde $\lambda_o$ précédente peut évoluer en fonction de différents paramètres.

On peut donc dire que si les gyromètres optiques à fibres sont parvenus à une sensibilité satisfaisante, l'encombrement de la bobine est prohibitif pour de nombreuses applications ; quant aux gyromètres en optique intégrée, la nécessité de les faire fonctionner selon un mode résonnant est génératrice de difficultés très réelles dans leur mise en oeuvre pratique.

Pour la bonne compréhension de la suite du présent texte, il est également nécessaire que soient développées quelques considérations sur un accessoire utile et connu depuis 1980 qui permet, dans les gyromètres optiques, de se placer dans des conditions d'exploitation correspondant au point de leur sensibilité maximale.

En effet, les gyromètres optiques sont le plus souvent d'une structure complètement symétrique en ce qui concerne l'anneau parcouru par la lumière. C'est le cas de toute façon des gyromètres à circuit intégré et il en résulte qu'en l'absence de toute composante rotative, le déphasage entre les ondes rotatives et contre rotatives est nul. Ces appareils sont par conséquent des interféromètres à deux ondes et l'intensité lumineuse I recueillie à la sortie du parcours dans l'anneau optique est de la forme

$$I = I_o \cos^2 \Delta\varphi/2$$

où $\Delta\varphi$ est le déphasage entre les deux ondes.

Si par suite d'une rotation imposée à l'appareil que l'on cherche précisément à mesurer, l'expression $\Delta\varphi$ varie de $\delta\varphi$ on peut écrire :

$$dI = 2 I_o \cos \Delta\varphi/2 \sin \Delta\varphi/2 \; \delta\varphi$$

$$= I_o \sin(\Delta\varphi)\delta\varphi$$

Ceci montre que lorsque le déphasage entre les deux ondes $\Delta\varphi$ est nul, il en est de même de dI et également de la sensibilité dI/d$\varphi$.

En revanche, $d_I/d\varphi$ est maximum si $\Delta\varphi=\pi/2$. Or, dI/d$\varphi$ représente précisément la sensibilité de l'appareil puisque c'est le taux de variation de l'intensité de sortie rapporté au taux de variation du déphasage.

De tout ce qui précède, on tire donc la certitude qu'il est idéalement souhaitable pour obtenir la meilleure sensibilité de l'appareil, de retarder l'une des ondes de $\pi/2$ par rapport à l'autre.

Pour résoudre ce problème, on utilise de façon classique le fait que la lumière n'a pas une vitesse infinie et met un temps $\tau$ pour parcourir l'anneau optique. En plaçant par conséquent un modulateur de phase en position dissymétrique sur l'anneau, il est possible d'agir de manière différente sur les deux ondes qui le parcourent en sens opposé et de retarder l'une de $\Delta\varphi$ par rapport à l'autre. Il suffit à cet effet de placer le modulateur à l'entrée pour une onde ce qui correspond à la sortie pour l'autre. Si la fréquence du modulateur est bien calculée, c'est-à-dire si elle est f = 2/$\tau$, on démontre que l'on peut parfaitement engendrer un effet non réciproque dans le conduit de lumière, ce qui conduit aux deux avantages suivants :

1°) Les lectures sont faites en se plaçant au point de sensibilité maximale de l'appareil pour une valeur de l'amplitude de modulation la plus faible possible ;
2°) La réponse du système comporte un terme à la fréquence de modulation f proportionnelle à sin $\delta\varphi$, ($\delta\varphi$ étant la variation de phase introduite par la rotation).

Il suffit donc de recourir à une détection synchrone du signal à la fréquence f pour obtenir une lecture de l'appareil dans d'excellentes conditions de rapport signal/bruit.

Les considérations précédentes concernant l'intérêt d'un modulateur placé sur l'anneau de lumière et qu'il était utile de rappeler ici avant la suite de l'exposé sont bien connues et on en trouvera notamment la confirmation dans le Journal of Lightwave Technology, Vol. LT, n° 2, d'avril 1984 cité précédemment, ainsi que dans l'article "All-single-mode fiber-optic gyroscope with long-term stability" publié page 502 et suivantes de la revue Optics Letters, vol. 6, n° 10 d'Octobre 1981.

De tels modulateurs, réalisés éventuellement en optique intégrée avec un matériau électro-optique ont été décrits dans l'article "An overview of fiber-optic gyroscopes", Journal Light Wave Technology, vol. LT2, n° 2, Avril 1984, p. 91 à 107.

On a également réalisé la fonction précédente de déphasage de l'une des ondes "rotative" par rapport à l'autre qualifiée alors de "contrarotative" non plus à l'aide d'un modulateur situé sur la spirale, mais d'un tricoupleur disposé à l'entrée de cette même spirale et beaucoup plus simple à réaliser qu'un modulateur. De telles réalisations ont toutefois été limitées à des gyromètres à fibres pour lesquels la miniaturisation poussée est impossible.

Si l'on veut réaliser un gyromètre miniaturisé solide, fiable, et qui plus est d'un prix réduit grâce à une fabrication en série, la solution de l'intégration optique s'impose comme la seule envisageable actuellement.

C'est la voie vers laquelle s'oriente le document japonais JP-A-62 247 209 publié le 28 Octobre 1987 qui décrit effectivement une sonde gyrométrique optique dont le guide d'ondes est une spirale intégrée selon un trajet en hélice sur un substrat. A l'entrée de cette spirale se trouvent disposés une diode laser servant de source de lumière et un polariseur et, à la sortie, un détecteur. Un modulateur est situé sur la spirale au voisinage d'une extrémité. Dans cette réalisation toutefois, seul le guide d'ondes proprement dit constituant la spirale est intégré sur le substrat, ce qui limite singulièrement les possibilités de miniaturisation de l'appareil et de fabrication en série.

En ce qui concerne l'état de la technique des gyromètres en optique intégrée et à sonde en spirale, on peut citer principalement les documents suivants :

- Le brevet EP-A-0 475 013, publié postérieurement à la date de priorité française du présent document montre l'association d'un tricoupleur en structure intégrée et d'une sonde en spirale, apparemment réalisée par des fibres optiques non intégrées.
- Le brevet japonais JP-A-10 064 283 montre un gyromètre possédant une sonde sous forme de spirale intégrée avec un croisement direct des guides d'ondes de la spirale.
- Le brevet japonais JP-A-62 247 209 décrit un gyromètre à spirale intégrée, mais dans lequel la structure de croisement des guides de la spirale n'est pas intégrée.

La présente invention a précisément pour objet un gyromètre optique, complètement intégré, possédant un tricoupleur et qui résout d'une manière simple les inconvénients préalablement rappelés des appareils de l'art antérieur.

Ce gyromètre optique à effet Sagnac comportant une sonde constituée d'une boucle optique en forme de spirale plane réalisée à l'aide de circuits optiques intégrés sur un substrat, comportant des guides de lumière pour la progression de deux ondes lumineuses en provenance d'une source de lumière et parcourant la spirale en sens inverse l'une de l'autre, les deux extrémités des guides de la spirale étant en liaison avec des moyens d'introduction des deux ondes lumineuses dans la spirale et de détection de chacune d'elles à leur sortie de la spirale, la liaison des extrémités des guides de lumière avec la source de lumière et les moyens de détection étant réalisés par un tricoupleur à trois guides rectilignes parallèles intégré sur le même substrat que la spirale, dont le guide central est relié à la source de lumière et dont les deux guides latéraux sont reliés chacun à un détecteur, les caractéristiques du tricoupleur étant choisies de façon à produire entre les deux ondes lumineuses qui parcourent la boucle optique, l'équivalent d'un déphasage au repos aussi voisin que possible de $\pi/2$, caractérisé en ce que le guide central (14) du tricoupleur (8) est muni, à son extrémité opposée à la source de lumière, d'une structure absorbante (26) pour contrôler et/ou éliminer la lumière guidée résiduelle à la sortie de ce guide central. En effet, les deux signaux lumineux sortant des guides latéraux du tricoupleur sont de la forme : $I_1 = A + B\cos\varphi + C\sin\varphi$ et $I_3 = A/B\cos\varphi - C\sin\varphi$ et leur différence ($I_1 - I_3 = 2\,C\sin\varphi$) proportionnelle à $\sin\varphi$ est l'équivalent d'un déphasage induit par la rotation du système.

Comme on le voit, la caractéristique essentielle de la présente invention réside dans le fait que l'on réalise le gyromètre en structure optique intégrée et que la fonction de déphasage de l'onde rotative par rapport à l'onde contrarotative est effectuée non plus par un modulateur, mais par un tricoupleur qui, situé à l'entrée des deux extrémités des guides de la spirale, sert à la fois à réaliser la fonction de déphasage et l'introduction de la lumière dans le système. De plus, conformément à l'invention, la spirale du guide de lumière et le tricoupleur sont intégrés ensemble sur un même substrat ce qui permet une miniaturisation complète de l'appareil et une fabrication de celui-ci en série. Cet appareil cumule donc les avantages propres à l'utilisation d'une sonde à grand nombre de tours et d'un modulateur permettant de travailler à la sensibilité maximale, et ceci dans une réalisation d'optique intégrée.

Toutefois, si la solution qui consiste à réaliser la sonde lumineuse du gyromètre à l'aide d'un conduit de lumière en spirale apporte des avantages tout à fait remarquables, elle comporte néanmoins une difficulté de principe qui réside dans le fait que l'un des conduits d'extrémité de la spirale (entrée ou sortie) doit impérativement franchir l'ensemble des spires de la boucle pour rejoindre l'autre conduit de lumière sur leur partie commune. Le problème technique posé par ce franchissement est, en structure intégrée, un réel problème, que l'invention résout de la façon suivante.

Dans un mode de mise en oeuvre préféré du gyromètre objet de l'invention, le franchissement des spires de la boucle par le conduit d'entrée (ou de sortie) de la spirale est réalisé sous forme d'un passage supérieur (ou inférieur) à la façon d'un pont, par superposition de deux structures guidantes croisées dont la structure inférieure, constituée par la spirale elle-même, est couplée optiquement à la structure supérieure de franchissement par deux coupleurs situés sur l'extrémité d'entrée (ou de sortie), respectivement de part et d'autre des guides d'ondes de la spirale.

Dans ce mode de mise en oeuvre, le franchissement de l'ensemble des spires de la spirale par l'un des guides de lumière est réalisé par un passage supérieur ou inférieur à la façon d'un pont, qui reçoit et transmet l'énergie lumineuse par l'intermédiaire de deux coupleurs optiques. Lorsque les deux structures guidantes sont identiques, les deux coupleurs utilisés sont des coupleurs simples fonctionnant par juxtaposition de deux guides optiques ; lorsque les structures guidantes sont différentes, ce qui conduit à des vitesses de propagation dans ces deux structures également différentes, il est avantageux sinon indispensable de recourir à des coupleurs associés à des réseaux pour réaliser l'accord de vitesse des ondes. L'intérêt de placer, conformément à l'invention, un absorbeur sur la branche centrale du tricoupleur, résulte notamment des considérations suivantes.

Le problème clé dans la réalisation du gyromètre optique est lié en grande partie au bruit que peuvent causer des systèmes d'interférences parasites.

En théorie, ce type de gyromètres qui utilise un effet physique non réciproque, l'effet Sagnac, s'affranchit de l'influence des paramètres extérieurs comme la température, les contraintes, les fluctuations de pression... qui sont par nature réciproques. Ceci est vrai si l'on utilise des architectures favorables maintenant bien connues et si certains phénomènes optiques parasites peuvent être minimisés. Parmi ces phénomènes optiques parasites, plusieurs sont connus pour être extrêmement gênants :

- La rétrodiffusion de la lumière dans le guide de lumière (fibre ou microguide optique intégré) ;
- Les réflexions parasites sur les interfaces de couplages (connexion avec la source de lumière, connexion avec les fibres...).

De façon générale tout bruit engendré par l'interférence entre les faisceaux lumineux de mesure et de la lumière parasite n'obéit pas à la réciprocité et conduit à des fluctuations des signaux de sortie qui ne peuvent être séparées des variations apportées par la grandeur à mesurer.

Ces fluctuations dépendent donc des paramètres extérieurs et causent des dérives d'autant plus préjudiciables qu'elles peuvent très vite atteindre des valeurs beaucoup plus élevées que celles des signaux à détecter.

Ceci est dû à la faiblesse des signaux de mesure dans l'effet Sagnac et au fait que le bruit parasite est gouverné par le produit des amplitudes de la lumière parasite et de la lumière guidée de signal.

Même si l'intensité de la lumière parasite est très faible (par exemple -60 dB, soit $10^{-6}$) le produit amplitude de lumière parasite (qui sera donc de $10^{-3}$) amplitude de la lumière guidée peut rapidement excéder la valeur du signal.

Toute lumière parasite doit donc être impitoyablement éliminée dans un gyromètre à fibre en optique intégrée.

Ceci est particulièrement délicat dans les gyromètres en optique intégrée pour les raisons suivantes :

On a à faire à une structure planaire dans laquelle une proportion non négligeable de la lumière parasite peut être piégée dans le même plan que les ondes de signal.

C'est en particulier vrai pour la lumière sortant du microguide médian du tricoupleur qui ne peut être annulée. Ce n'est pas ici à proprement parler de la lumière parasite due à des imperfections du dispositif mais l'effet sur le niveau de bruit est identique et d'autant plus gênant que le niveau d'intensité de cette lumière issue du guide médiant est beaucoup plus élevé que celui de la lumière parasite générée par des imperfections de la structure.

Il est donc fondamental de l'atténuer le plus possible. C'est aussi vrai, mais à un degré moindre, par la lumière générée vers l'extérieur par les microguides de la spirale. Celle-ci piégée dans la structure planaire, peut se recombiner avec les microguides voisins et produire de la même façon des signaux d'interférence fluctuant dans le temps.

Dans les deux cas, les effets sont amplifiés par la miniaturisation recherchée dans les gyromètres optiques intégrés.

Ainsi, les distances mises en jeu entre la sortie du guide médian du tricoupleur et les boucles de la spirale seront de l'ordre du millimètre ou de quelques millimètres.

Les distances séparant chaque boucle de la spirale seront de quelques dizaines de microns seulement. Ces distances sont bien entendues beaucoup plus faibles que celles entrant en jeu dans les gyromètres à fibres classiques.

La combinaison des deux effets précités (guidage planaire et distances d'interaction faibles) rend d'autant plus nécessaire l'élimination radicale de la lumière parasite par la mise en place d'absorbeurs appropriés.

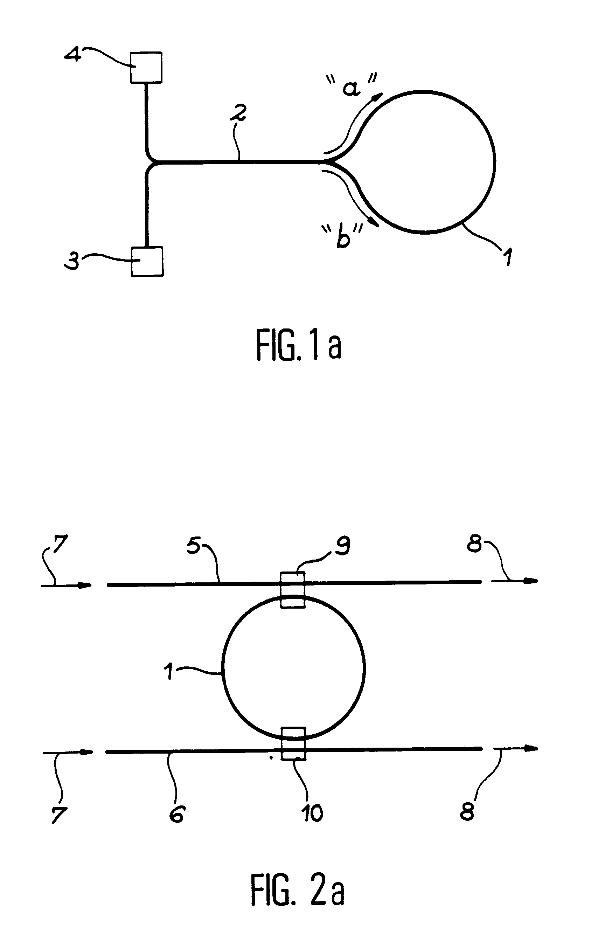

De toute façon l'invention sera mieux comprise en se référant à la lecture qui suit de la description de plusieurs exemples de mise en oeuvre d'un gyromètre optique sous forme intégrée, comportant ces structures de franchissement des spires de la spirale par l'un des conducteurs et un tricoupleur d'entrée. Les exemples qui suivent sont donnés bien entendu à titre illustratif et non limitatif en se référant aux figures 1 à 18 sur lesquelles :

- La figure 1 représente, en vue de dessus schématique, le gyromètre optique, objet de l'invention ;
- la figure 2 représente une variante du gyromètre de la figure 1 ;
- la figure 3 représente, en coupe un mode de réalisation du tricoupleur du gyromètre ;
- la figure 4 représente, en coupe, un autre mode de réalisation du tricoupleur du gyromètre ;
- la figure 5 et la figure 6 montrent des schémas de croisements possibles coplanaires entre les microguides du conduit d'entrée et ceux de la spirale ;
- la figure 7 montre un exemple de réalisation possible du franchissement des spires du guide constituant la spirale par le conducteur d'entrée ;
- les figures 7a à 7g montrent les différentes étapes de réalisation de cette structure de franchissement représentées en coupe sur les figures 7a, 7c, 7e et 7g et en vue de dessus représentées en correspondance sur les figures 7b, 7d et 7f ;
- la figure 8 montre une autre structure possible de ce même franchissement des spires par le conducteur d'entrée et les figures 8a à 8f montrent les étapes de réalisation de la structure de la figure 8 représentées en coupe pour les figures 8a et 8e et vues de dessus pour les figures 8b, 8d et 8f ;
- les figures 9, 10 et 11 montrent plusieurs réalisations d'absorbeur de deux types différents selon deux structures intégrées distinctes ;
- les figures 13, 14, 15 et 16 montrent plusieurs absorbeurs de deux types différents, selon deux structures intégrées distinctes, mais réalisés en même temps ;
- la figure 17 montre un détail de réalisation perfectionnée de la zone milieu de la spirale ;
- la figure 18 montre un détail de réalisation perfectionnée des zones d'extrémité des conduits de la spirale.

Sur la figure 1 on a représenté une description schématique de l'architecture générale d'un gyromètre à optique intégrée selon l'invention.

Pour l'essentiel, ce gyromètre comprend une spirale 2 de guides de lumière intégrée sur un substrat et possédant deux extrémités 4 et 6 de jonction avec l'extérieur. Conformément à la caractéristique essentielle de l'invention, cette jonction avec l'extérieur est réalisée par le tricoupleur 8 constitué de trois guides linéaires et parallèles sur la longueur d'interaction nécessaire $L_i$. Pour permettre l'échange d'énergie correct entre ces trois guides référencés respectivement 10 et 12 pour les guides extérieurs et 14 pour le guide central, on prévoit entre eux, un espacement d'une distance inférieure à 10 micromètres et le plus souvent comprise entre 1 et 5 micromètres. En ce qui concerne la distance d'interaction optimale $L_i$, elle est calculée de façon à optimiser le coefficient de couplage C entre les trois guides rectilignes et parallèles 10, 12 et 14 et par conséquent l'amplitude du signal détecté.

Comme on le voit sur la figure 1, qui représente une vue de dessus de l'appareil, les deux guides externes 10 et 12 du coupleur 8, sont reliés respectivement à l'entrée 4 et à l'entrée 6 de la spirale 2. Les guides 10 et 12 sont également reliés à deux détecteurs de lumière 16 et 18. Quant à la branche centrale 14 du tricoupleur, elle est alimentée en lumière par une source lumineuse 20 dotée d'une faible cohérence. Cette source lumineuse peut être quelconque dès lors qu'elle satisfait la condition précédente, mais il est particulièrement avantageux de la réaliser à l'aide d'une diode superradiante.

Les éléments précédemment décrits sont nécessaires et suffisants au fonctionnement du gyromètre objet de l'invention. Ils sont néanmoins avantageusement complétés à l'entrée par un filtre spatial 22 et un polariseur 24 destiné à obtenir une polarisation de la lumière ainsi que par un absorbeur 26 qui en détectant le flux lumineux restant après le couplage entre les trois guides 10, 12 et 14, permet de contrôler et d'absorber l'énergie lumineuse subsistant éventuellement à l'extrémité du guide de lumière 14 du tricoupleur 8.

La figure 2 montre un mode de réalisation particulier du gyromètre, objet de l'invention, dans lequel le tricoupleur 8 et les accessoires qui lui sont reliés sont situés à l'intérieur de la spirale 2 elle-même, autorisant ainsi, dans certains cas, une miniaturisation plus grande de l'appareil. Sur cette figure 2, les éléments constitutifs du gyromètre portent les mêmes nombres de référence que sur la figure 1 et ne sont pas décrits à nouveau en détail.

Le filtre spatial placé à l'entrée du gyromètre permet de filtrer le mode guidé en évitant de transporter des modes parasites consécutifs à une mauvaise injection de la lumière dans le guide. Il est d'un type connu et peut notamment être réalisé selon les enseignements de la demande FR-A-0 073 049 du 13 Juin 1990.

Conformément à l'invention, les guides de lumière constituant la spirale 2 du gyromètre peuvent être avantageusement protégés par des structures absorbantes, interdisant toute communication et échange d'énergie lumineuse entre les différents guides de la spirale.

Ces structures absorbantes peuvent être constitués d'une couche métallique recouverte ou non de diélectrique dans les structures du type $Si/SiO_2/Si_3N_4/SiO_2$. L'épaisseur du métal n'est pas critique et est de l'ordre de 50 à 500 nanomètres. Dans le cas d'une telle structure, le métal est directement déposé sur la couche de haut indice constituant le coeur et de part et d'autre du coeur du microguide.

Dans les structures du type $Si/SiO_2/SiO_2$ dopée à haut indice/$SiO_2$, la couche métallique est le plus souvent déposée directement sur la couche $SiO_2$ à haut indice de part et d'autre du coeur du microguide. La forme géométrique désirée pour la couche métallique est obtenue par gravure du métal ou par la technique bien connue de lift-off. L'épaisseur du métal peut être faible et de façon avantageuse de l'ordre de 5 à 20 nanomètres suivant le métal utilisé. L'absorbeur ainsi réalisé peut être avantageusement recouvert d'une couche de $SiO_2$ ou d'un diélectrique.

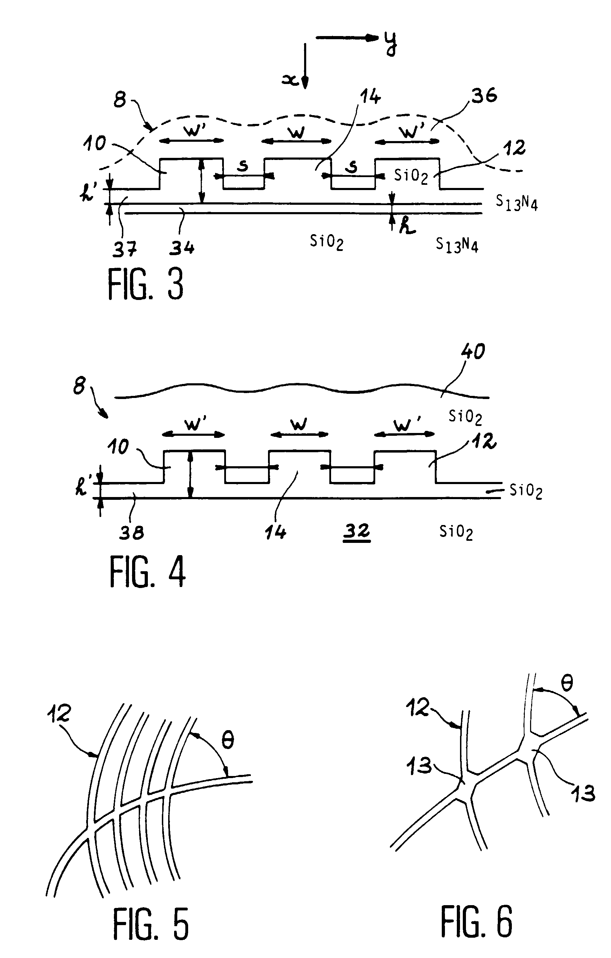

En se référant maintenant aux figures 3 et 4, on va montrer schématiquement un exemple de réalisation, selon deux structures d'intégration optique différentes, du tricoupleur 8, objet de l'invention, représenté en coupe élévation selon le plan vertical AA des figures 1 et 2.

La figure 3 montre une réalisation possible de ce tricoupleur 8 dans la structure connue $Si/SiO_2/Si_3N_4/SiO_2$. On trouve donc successivement sur cette figure un substrat 30 surmonté d'une couche de silice 32 puis une couche 34 de nitrure de silicium $Si_3N_4$ constituant le coeur de la structure guidante. Cette structure 34 a une épaisseur h. Elle est surmontée, conformément à l'invention, du tricoupleur 8 proprement dit comportant les trois guides externes 10 et 12 et interne 14 en silice $SiO_2$. Dans ce mode de réalisation, les guides 10, 12 et 14 sont formés par la seule gravure de la couche supérieure de silice $SiO_2$ sans que l'on touche au coeur 34 proprement dit en nitrure de silicium. L'ensemble peut être recouvert facultativement d'une couche 36 de diélectrique d'indice de réfraction n tel que n soit plus petit que $n_{SiO_2}$. La couche 34 du coeur du guide peut être recouverte éventuellement dans la partie planaire d'une épaisseur 37 d'une hauteur h' de silice $SiO_2$. Celle-ci peut toutefois être nulle, c'est-à-dire inexistante. Selon l'invention, le tricoupleur 8 devant être symétrique, les deux guides extrêmes 10 et 12 ont une largeur W' égale et le guide central W peut avoir éventuellement une largeur différente. Dans la pratique, il est plus simple de fixer W=W' et de réaliser les trois guides 8, 12 et 14 avec une largeur unique.

Suivant l'épaisseur h de nitrure $Si_3N_4$ qui varie de 0,04 à 0,2 micromètre (condition de monomodalité suivant la direction x), la hauteur p des guides proprement dits est telle que :

$$0,3 < p < 5 \text{ micromètres}$$

Quant à la valeur de h', elle permet une liberté de choix plus grande sur les largeurs W et W', sans pour autant quitter le fonctionnement en monomode transverse (suivant y). En particulier, si h' = 0 et $hSi_3N_4$ = 0,16 micromètre, il faut que W,W'<1 micromètre pour que l'on soit en mode monomode transverse, ce qui est une valeur faible. h' sera alors pratiquement compris entre les valeurs suivantes :

$$0 \leq h' < 3 \ \mu m < h$$

Le recouvrement par un diélectrique 36 d'indice $n < nSiO_2$ joue un rôle équivalent à l'épaisseur restante h'. Mais comme l'indide n est plus faible que $nSiO_2$, il assure le confinement dans tous les cas. En pratique, et pour raison de reproductibilité, on choisit son épaisseur $W_D$ infinie, c'est-à-dire ici supérieure à l'épaisseur de pénétration des ondes évanescentes (de l'ordre de 1 à 6 micromètres).

En se référant maintenant à la figure 4, on va décrire un mode de réalisation du tricoupleur 8 dans une structure intégrée du type $Si/SiO_2/SiO_2$ dopée/$SiO_2$. On retrouve sur cette figure 4 les éléments correspondants de la figure 3 précédente, à savoir le substrat de base 30 en silicium, la couche 32 en silice $SiO_2$ et les trois guides 10, 12 et 14 du tricoupleur. La différence par rapport à la structure de la figure 3 réside dans le fait que les trois guides 10, 12, 14 précédents sont formés directement par gravure de la couche 38 en silice à haut indice obtenu par dopage à l'aide d'échange d'ions.

Dans cette structure, la hauteur h des guides est telle que $1,5 < h < 10$ micromètres et la hauteur h' de la couche à haut indice 38, en dehors des guides eux-mêmes, est telle que $0 < h' < 4$ micromètres.

Dans cette structure, l'ensemble est recouvert d'une couche de $SiO_2$ dopée ou non dopée 40, à condition que l'indice du coeur du guide soit le plus grand.

Pour qu'un tel tricoupleur fonctionne de façon optimale, on doit définir la longueur d'interaction optimale Li entre les guides pour que les échanges lumineux de l'un à l'autre interviennent correctement. Cette longueur d'interaction dépend à la fois des paramètres S (distance entre deux guides voisins) W et W' (largeur des guides 10, 12 et 14) et des indices de réfraction des composants de la structure. La relation générale qui définit cette longueur d'interaction optimale est complexe et l'on choisit la solution de façon à rendre maximale l'énergie lumineuse sur les guides extrêmes 10 et 12 après un aller-retour de la lumière au travers de la spirale. A titre d'exemple, on peut donner les grandeurs suivantes.

Dans une structure conforme à celle de la figure 4 et avec les paramètres suivants :
$h = 2 \ \mu m$, $h' = 0,8 \ \mu m$, $\Delta n(n_{SiO_2 dopée} - n_{SiO_2}) = 10^{-2}$
$W = W' = 6 \ \mu m$, $S = 2 \ \mu m$, la valeur de la longueur $L_i$ est;
$L_i = 2700 \ \mu m$.

Si avec les mêmes valeurs précédentes, on choisit $W = W' = 6$ micromètres et $S = 3$ micromètres, cette longueur optique optimale n'est plus que de 5200 micromètres.

Il est cependant intéressant de noter que cette longueur de couplage $L_i$ n'est pas un paramètre trop critique, et que des fluctuations de l'ordre de 10% autour des valeurs théoriques ne sont pratiquement pas préjudiciables au bon fonctionnement du gyromètre.

Selon l'invention, les guides de la spirale 2 sont réalisés en optique intégrée selon tous les types possibles de guides d'ondes connus tels que par exemple les structures $SiO_2/Si_3N_4/SiO_2$, $Si/SiO_2/SiO_2$ dopée/$SiO_2$, verre dopé par échange d'ions, $LiNbO_3$, etc. En d'autres termes, le choix d'un type particulier de guide d'ondes pour réaliser le gyromètre des figures 1 et 2 ne fait pas partie, à proprement parler de l'invention, et l'homme de l'art choisit, dans chaque cas particulier en fonction de la connaissance qu'il a des matériaux, le type de guide d'ondes le plus approprié.

Sur la figure 1 comme sur la figure 2, on a représenté en 25, la zone de franchissement des spires de la spirale 2 par l'un des guides (entrée ou sortie) de lumière du système. C'est la réalisation de cette zone 25 qui sera maintenant décrite.

Les figures 5 et 6 représentent des structures planes de franchissement des spires de la boucle 2 de la spirale par le guide d'entrée ou de sortie par croisement direct et coplanaire des guides de lumière dans le plan de la boucle elle-même. L'angle θ de croisement du conducteur d'entrée avec les spires de la spirale 2 est choisi de préférence supérieur à 10° pour éviter la lumière parasite qui, lorsque l'angle est très faible, peut s'égarer dans une direction qui n'est pas celle souhaitée et provoquer ainsi des parasites éventuels gênants pour l'exploitation des résultats par les détecteurs 16, 18. La configuration de croisement coplanaire de la figure 6 comportant un plot de guide de lumière 13 à chaque carrefour entre deux guides permet d'atténuer l'effet précédent. D'autre part, comme le dispositif des figures 1 et 2 utilise une source 20 ayant une faible longueur de cohérence, par exemple de l'ordre de 50 micromètres, la lumière parasite ne peut pas interférer avec le signal. Il en résulte seulement un niveau de bruit constant. Ceci est vrai d'ailleurs de façon générale dès que la longueur de cohérance est inférieure à la différence de marche entre l'onde incidente et les ondes parasites.

Comme on l'a déjà expliqué précédemment, l'intérêt de la structure en spirale 2 de la sonde du gyromètre des figures 1 et 2 réside dans le fait que l'on parvient, en structure intégrée, à augmenter la sensibilité de façon importante en fonction du nombre de spires sans être obligé d'utiliser, un fonctionnement en mode résonnant qui imposait des contraintes d'exploitation souvent difficiles à respecter.

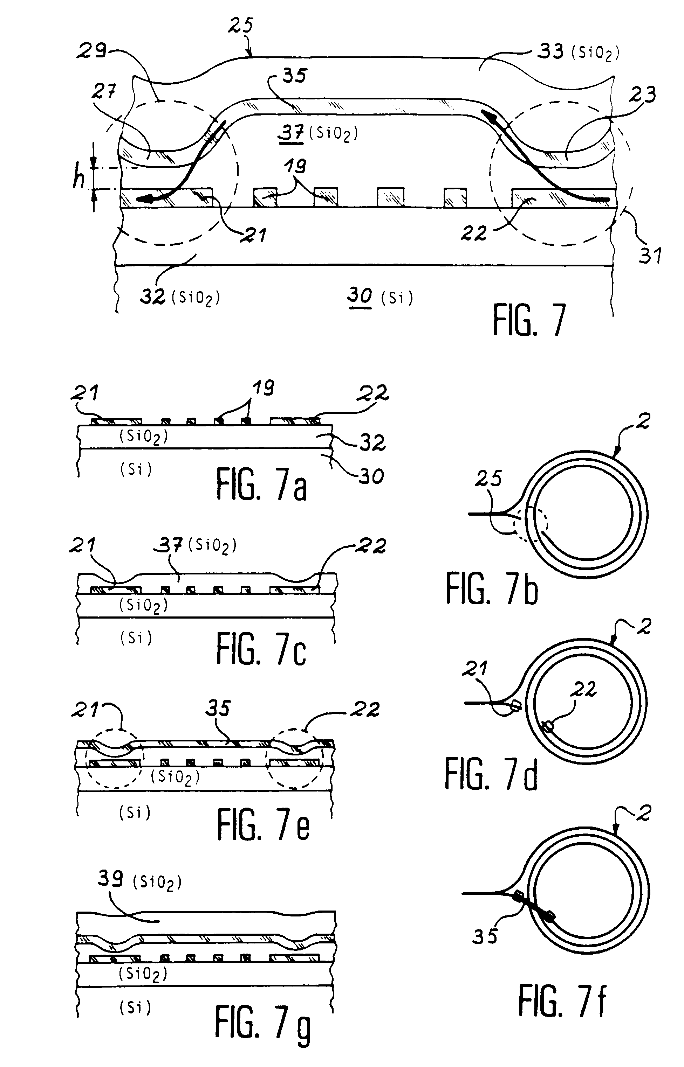

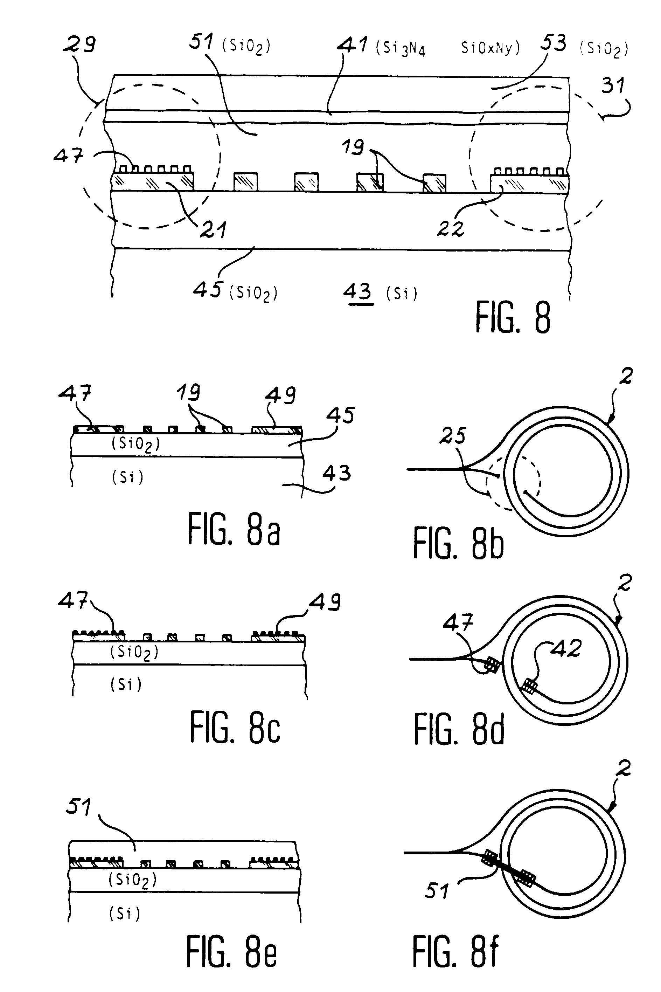

Les figures 7 et 8 suivantes vont permettre de décrire des modes de réalisation possibles du passage difficile 25 des figures 1 et 2. Dans ces figures 7 et 8, les passages décrits sont des franchissements supérieurs à la manière de ponts, mais il doit être bien entendu que ceci n'est pas limitatif et que des solutions qui consisteraient à utiliser des passages inférieurs seraient tout aussi bien performantes.

Dans le cas de la figure 7, on superpose dans la zone de passage difficile 25 deux structures guidantes identiques l'une au-dessus de l'autre pour réaliser le pont de franchissement souhaité. La structure guidante utilisée dans cet exemple décrit est une structure du type $Si/SiO_2/SiO_2$ dopée/$SiO_2$, mais pourrait tout aussi bien être une structure différente.

Dans le cas de la figure 7, la structure de base comporte la couche de silicium 30 surmontée d'une couche de silice 32 et de différents guides en silice $SiO_2$ dopée. Parmi ceux-ci on trouve les guides 19 de la spirale 2 proprement dite et les deux pavés inférieurs 21 et 22 des coupleurs 29 et 31 de cette première structure avec la structure supérieure qui la surmonte. Cette structure supérieure comporte une couche en silice 33, un guide de lumière proprement dit en silice dopée 35 ; quant à la couche 37, commune aux deux structures, elle est réalisée en silice. On voit sur cette figure 7 le coupleur 29 constitué par le pavé 21 et la partie immédiatement au-dessus 27 du microguide 35 et le coupleur 31 situé sur l'autre bord de la spirale et constitué du pavé 22 et de la partie surbaissée 23 du microguide 35. Les flèches en traits continus symbolisent la façon dont la lumière passe dans le coupleur 31 du pavé 22 au guide 35 et dans le coupleur 29 du guide 35 dans le pavé 21. Ce mode de mise en oeuvre permet ainsi le franchissement de la zone difficile 25 sans qu'il en résulte aucune gêne pour la propagation de la lumière dans les guides de la spirale 2.

Sur les figures 7a à 7g on a représenté à titre explicatif les principales étapes du procédé de préparation du pont de franchissement de la figure 7. Sur un substrat de silicium revêtu de silice, on commence par déposer, comme visible sur la figure 7a, les pavés 21 et 22 des coupleurs futurs ainsi que les guides en spirale 19 de la spirale 2. Le système à ce stade a l'allure représentée vu de dessus sur la figure 7b.

L'étape suivante consiste à déposer par dépôt chimique en phase vapeur assisté par un plasma, suivi d'une gravure chimique, la couche intermédiaire 37 de silice. Cette couche comporte au-dessus des pavés 21 et 22 des échancrures dans lesquelles viendra se loger ultérieurement le conduit de lumière 35 lui-même. La vue de dessus du gyromètre correspondant à l'état de cette figure 7c est représentée sur la figure 7d.

La phase suivante (fig. 7e) consiste à déposer sur la structure précédente le coeur de la structure guide 35 et à graver ce coeur au travers d'un masque. La matière du coeur 35 est la silice dopée. La vue de dessus du même dispositif dans cet état est représentée par la figure 7f.

L'étape suivante consiste dans le dépôt de la couche finale ou superstrat 39 comme on le voit sur la figure 7g. Ce dépôt qui est fait en silice $SiO_2$ peut être également réalisé par dépôt chimique en phase vapeur assisté par un plasma.

Comme l'homme de métier le sait, les épaisseurs données aux différentes couches dépendent des indices effectifs désirés pour chacune de celles-ci et de la nécessité d'obtenir un passage correct de l'onde évanescente au niveau des coupleurs 29 et 31.

En se référant maintenant à la figure 8, on va décrire un autre mode de réalisation de la zone de franchissement 14 dans le cas où celle-ci est obtenue à l'aide de deux structures superposées non identiques. Dans un cas de ce genre, le couplage entre la structure inférieure et la structure supérieure est en général très faible puisque les vitesses des ondes lumineuses guidées dans chaque structure sont différentes. Pour que le passage de lumière ait néanmoins lieu entre ces deux structures, il faut constituer les coupleurs d'un réseau de pas p tel que :

$$\beta_1 + \frac{2\pi m}{p} = \beta_2$$

avec

$$\beta_1 = \frac{2\pi n_1}{\lambda_o} \qquad et \qquad \beta_2 = \frac{2\pi n_2}{\lambda_o}$$

$\beta_1$ et $\beta_2$ étant les constantes de propagation des modes des structures des deux guides supérieur et inférieur, p le pas du réseau, m l'ordre de difraction, et $n_1$ et $n_2$ les indices effectifs des coeurs 19 et 41 des guides supérieur et inférieur. Si l'on tient compte des conditions précédentes, le couplage entre les structures supérieur et inférieur est excellent et permet la réalisation du franchissement de la zone 25. Dans l'exemple de la figure 8, la structure inférieure est du type $Si/SiO_2/SiO_2$ dopée/ $SiO_2$ et celle du guide supérieur est du type $Si/SiO_2/Si_3N_4$ (ou $SiO_xN_y$)/$SiO_2$. c'est ce que l'on voit sur la figure 8 où le substrat inférieur 43 est en silicium et surmonté d'une première couche en silice 45. A la surface de cette couche 45 sont situés les guides de lumière 19 de la spirale 2 en silice dopée ainsi que les plots 21 et 22, également en silice dopée, de support des réseaux 47 et 49.

La couche de silice 51 qui surmonte les guides 19 et les plots 21 et 22 des coupleurs 29 et 31 est commune à la structure inférieure et à la structure supérieure. Cette dernière comprend le guide de lumière proprement dit 41 en nitrure de silicium $Si_3N_4$ ou en un composé du type $SiO_xN_y$ et est surmontée de la couche de silice 53. Les réseaux 47 et 49 assurent le couplage lumineux entre les deux structures précédentes par l'intermédiaire de la couche guidante 41. La structure de la figure 8 est technologiquement viable si l'on respecte, pour les constantes $\beta_1$ et $\beta_2$ les conditions précédemment énoncées, c'est-à-dire, en particulier, si les épaisseurs et les indices des différents guides sont convenables et cohérents avec le pas p des réseaux 47 et 49.

Bien que l'homme de métier sache réaliser les structures guidantes de la figure 8, on a représenté schématiquement sur les figures 8a à 8f les principales étapes de réalisation de cette structure.

Sur la figure 8a, on a représenté le substrat 43 en silicium surmonté de la couche de silice 45 sur laquelle on vient graver les guides 19, et les réseaux 47 et 49 de façon connue. La structure parvenue à ce stade est représentée en vue de dessus sur la figure 8b.

L'étape suivante consiste en la réalisation des réseaux 47 et 49 par gravure sèche à travers un masque suivi de dépôts en phase vapeur ou par pulvérisation cathodique. La figure 8d représente l'état de cette même structure vue de dessus avec les réseaux 47, 49 situés de part et d'autre des conduits de la spirale 2.

La figure 8e montre le dépôt par voie chimique en phase vapeur de la couche intermédiaire de silice 51 commune aux deux structures. L'état du dispositif est alors visible de dessus sur la figure 8f ; il suffit de le compléter par le dépôt du coeur 41 des guides 19 suivi d'une gravure et d'un dépôt du superstrat de silice $SiO_2$. Comme dans l'exemple de la figure 7, les épaisseurs de chacun des dépôts sont choisies par l'homme de métier en fonction des indices effectifs désirés pour chaque couche.

Les figures 1 et 2 comportent sur leur guide central 14 un polariseur 24 dont on a déjà dit qu'il n'était pas strictement nécessaires au bon fonctionnement de l'appareil mais qu'il apportait néanmoins une amélioration intéressante. Les considérations qui suivent permettront à l'homme de métier de le réaliser facilement.

Ce polariseur 24 est avantageux pour sélectionner une polarisation unique de la lumière car la source lumineuse 20 utilisée, par exemple une diode superradiante, n'émet pas toujours une lumière suffisamment polarisée. Cette polarisation est obtenue en recouvrant le guide de lumière 14 des figures 3 et 4 d'une couche de diélectrique. L'effet de polarisation de la lumière ainsi obtenu repose sur la différence de pénétration l des ondes évanescentes transverses électriques (TE) ou de polarisation orthogonale (TM). En effet, on sait que :

$$l_{TE} < l_{TM},$$

pour un même guide d'onde. De plus, pour un métal donné, déposé sur un guide d'onde, l'absorption $\alpha_{TM}$ est toujours plus forte que l'absorption $\alpha_{TE}$.

Il suffit donc de recouvrir le guide de lumière d'une couche diélectrique d'épaisseur l telle que $l_{TE} < l < l_{TM}$.

Par exemple dans le cas de la structure du tricoupleur représenté sur la figure 1, si l'on choisit $W_{Si_3N_4} = 0,165$ micromètre, $l_{SiO_2}$ est de l'ordre de 0,25 à 0,40 micromètre dans le cas le plus favorable où l'absorption différentielle ($\alpha_{TM} - \alpha_{TE}$) est maximisée (suivant le métal utilisé Al, Au, Cr ou Ti).

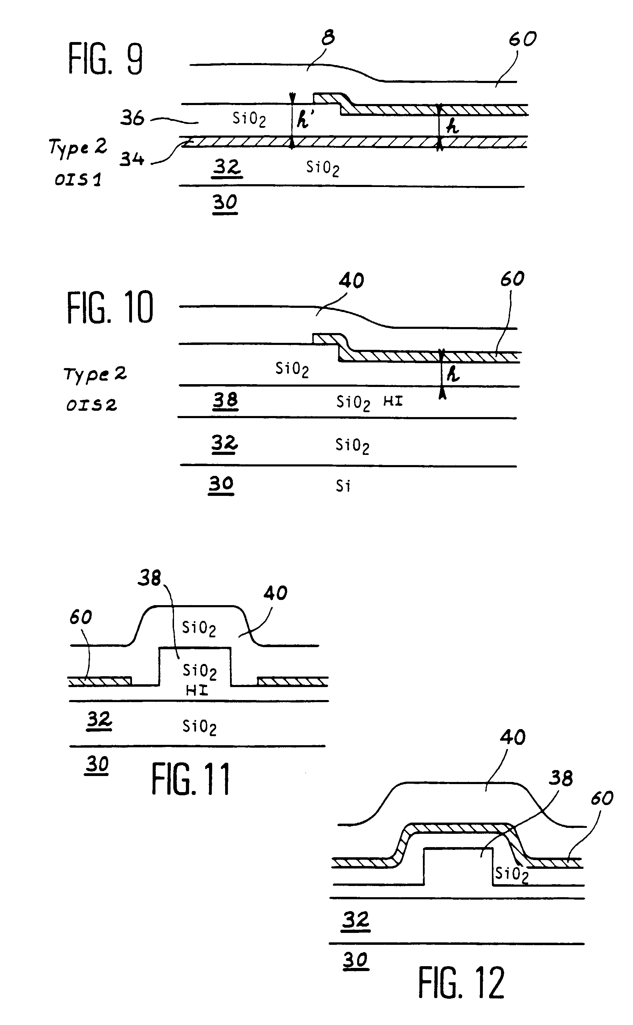

On décrira maintenant en référence aux figures 9 à 16 divers modes de réalisation des absorbeurs qui sont utilisés dans le gyromètre, objet de l'invention, à deux endroits différents où ils correspondent chacun à un type de réalisation particulier : l'absorbeur qui protège les guides de lumières de la spirale 2 et que l'on appellera par commodité dans la suite, "absorbeur de type 1" et l'absorbeur 26 situé à l'extrémité du conduit 14 du tricoupleur 8 que l'on dénommera dans la suite du texte "absorbeur du type 2". Ces deux types d'absorbeurs peuvent être réalisés conformément à l'invention dans toute structure intégrée connue et notamment les structures les plus souvent utilisées qui sont les structures $Si/SiO_2/Si_3N_4/SiO_2$ d'une part et $Si/SiO_2/SiO_2$ dopée/$SiO_2$ d'autre part. Les deux structures précédentes seront désignées dans la suite du texte respectivement par structure 1 et structure 2 pour faciliter l'exposé.

D'une manière générale, les absorbeurs de type 1 et de type 2 peuvent être réalisés aussi bien à l'aide de la structure 1 que de la structure 2. L'homme de métier saura choisir dans chaque cas particulier, la solution appropriée. On rappellera également que les absorbeurs, qu'ils soient de type 1 ou de type 2, ne sont que des auxiliaires, certes très avantageux de l'invention, mais l'on pourrait néanmoins concevoir un gyromètre qui ne les utiliserait pas.

En ce qui concerne d'abord les absorbeurs de type 1, ils sont placés autour des conduits de lumière de la spirale 2 pour éviter l'échange d'énergie entre les différentes spires ainsi que le piégeage de lumière parasite éventuellement engendrée par des défauts des guides (coupure, défaut du masque de fabrication, rugosité des bords etc) ou par les composants eux-mêmes en particulier par les passages 25 de croisement de l'une des extrémités du guide par la spirale 2.

Dans la structure intégrée de type 1, ils sont constitués d'une couche métallique recouverte ou non de diélectrique. L'épaisseur du métal constituant cette couche est peu critique et elle est généralement de l'ordre de 50 à 500 nanomètres. Le métal est directement déposé sur la couche de silice à haut indice constituant le coeur de part et d'autre de ce coeur.

Dans les structures intégrées de type 2, la couche métallique est le plus souvent déposée directement sur la couche de silice $SiO_2$ à haut indice et de part et d'autre du coeur du microguide. La forme désirée est obtenue par gravure du métal ou par la technique bien connue de lift-off. L'épaisseur du métal doit être faible et favorablement de 5 à 20 nanomètres suivant le métal utilisé. Un recouvrement par une couche de $SiO_2$ ou d'un matériau diélectrique est favorable, notamment pour les absorbeurs de type 1.

Les absorbeurs de type 2 sont rendus nécessaires par le fait que la longueur d'interaction optimale des trois guides 10, 12 et 14 du tricoupleur 8 ne conduit pas à une intensité de lumière nulle à l'extrémité du guide central 14. Dans ces conditions, l'absorbeur 26 est utilisé soit pour contrôler la puissance injectée sous forme lumineuse dans la spirale 2, soit au contraire pour éliminer l'intensité lumineuse restante à l'extrémité du conduit 14. Les absorbeurs de type 2 sont différents des absorbeurs de type 1 car leur rôle est d'absorber une lumière guidée en sortie du microguide et non une lumière parasite proprement dite. Pour cette raison, il est judicieux de placer la couche métallique constituant l'absorbeur de type 2 directement sur le coeur du guide ou mieux encore sur la couche de recouvrement, mais à une distance du coeur de ce guide qui permet encore une interaction entre la couche métallique et la lumière. Il faut bien noter que la couche de recouvrement ayant le plus souvent une épaisseur suffisante pour assurer une protection totale du guide devra être gravée avant le dépôt métallique pour former les absorbeurs de type 2.

Sur les figures 9 à 16 qui suivent, les structures d'absorbeurs représentées ont des couches représentées qui portent les mêmes nombres de référence que sur les figures précédentes et dont on ne décrira pas à chaque fois le détail. La couche métallique qui réalise de façon pratique la fonction d'absorption est référencée 60 sur ces différentes figures.

La figure 9 représente, dans une structure 1 un absorbeur du type 2, l'ensemble étant vu en coupe suivant l'axe du microguide 34. La couche métallique 60 a une épaisseur de 50 à 500 nanomètres, la couche 34 étant en nitrure de silicium $Si_3N_4$ ou d'une façons plus générale $SiO \times N_4$ avec : une largeur W pour le nitrure de silicium = 165 nanomètres, une hauteur h'$SiO_2$ de l'ordre de 1,2 micromètres et une hauteur h de l'ordre de 10 à 40 nanomètres. Dans cet exemple, la longueur d'onde utilisée est 0,8 micromètre.

La figure 10 représente également un absorbeur de type 2, mais dans la structure 2. C'est avec ce type de structure que l'absorbeur de type 2 est plus utile, car la discontinuité est plus forte du fait de la forte pénétration de la lumière guidée dans la couche de recouvrement. La figure 10 est également une vue en coupe suivant l'axe du microguide. Dans cette réalisation, la couche métallique 60 a une épaisseur de 5 à 20 nanomètres. Quant à l'épaisseur h, elle est inférieure à la profondeur de pénétration de l'onde évanescente du mode guidé. Dans tous les cas, les absorbeurs de type 2 recouvrent le guide de lumière proprement dit alors que pour les absorbeurs de type 1, qui ne doivent pas perturber la propagation dans le guide, on place ces mêmes absorbeurs de part et d'autre du guide. C'est ce que représentent les figures 11 et 12 qui montrent des structures de type 2 et cette fois en coupe perpendiculaire à l'axe du guide, avec un absorbeur de type 1 sur la figure 11 et un absorbeur de type 2 sur la figure 12.

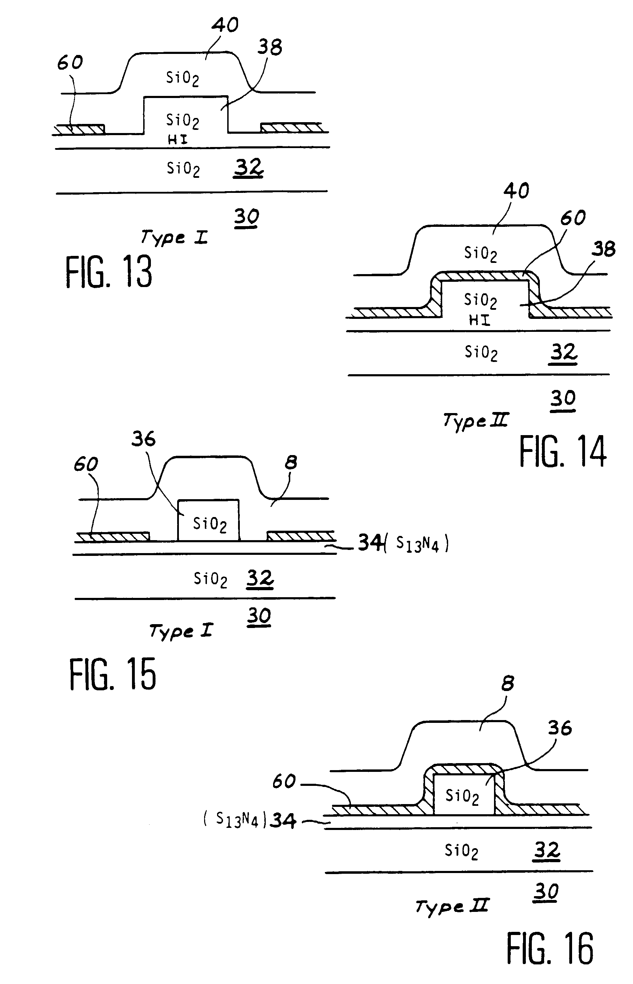

L'invention a également pour but, en ce qui concerne des absorbeurs précédents d'un gyromètre en optique intégrée, un mode de réalisation qui permet de réaliser en même temps les absorbeurs de type 1 et de type 2 par le même procédé technologique. Ceci est assez intéressant car il faut autrement un grand nombre d'étapes technologiques pour réaliser séparément les deux types d'absorbeurs. Ce résultat est obtenu, comme on le voit sur les figures 13 à 16 en recouvrant les parois latérales du microguide par la couche de métal 60. On voit ainsi sur la figure 13 un absorbeur de type 1 dans la structure 2, puis, sur la figure 14 un absorbeur de type 2 dans cette même structure 2 ; les figures 15 et 16 au contraire, sont relatives à la structure 1 pour la réalisation d'un absorbeur de type 1 (figure 15) et de type 2 (figure 16).

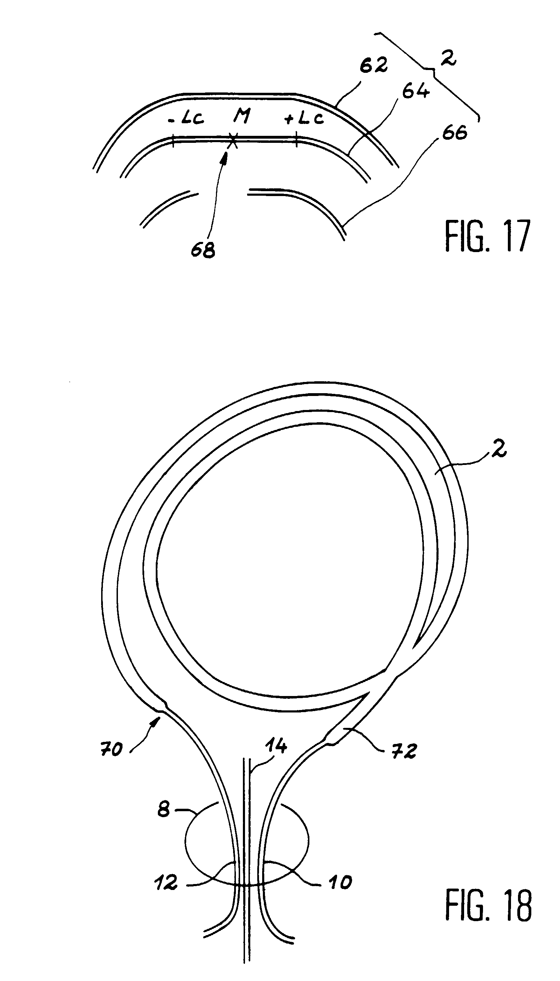

La figure 17 montre maintenant un perfectionnement secondaire mais néanmoins important de la présente invention. On voit sur cette figure 17 un certain nombre de guides de lumière 62, 64 et 66 appartenant à la spirale 2. Ces guides sont représentés au voisinage du point milieu M de cette spirale, c'est-à-dire du point atteint en même temps par les ondes rotatives et contrarotatives qui parcourent les spires du gyromètre quand celui-ci est au repos.

Compte tenu de la longueur de cohérence $L_c$ de la lumière émise par les diodes superradiantes, qui est de l'ordre de 30 à 100 micromètres, il faut éviter à tout prix d'engendrer de part et d'autre du point milieu M des lumières parasites et ce sur une longueur de l'ordre de la longueur de cohérence $L_c$. Dans cette zone, des guides de lumière 62, 64 66, etc doivent être par conséquent les plus parfaits possibles. C'est pourquoi en particulier, conformément à l'invention, il est très utile de les réaliser à cet endroit sous forme de trajet rectiligne, tel que 68, qui présente moins de défauts que les sections courbes.

Enfin, en se référant à la figure 18, on décrit un autre mode de mise en oeuvre perfectionné du gyromètre selon l'invention. Dans ce mode de mise en oeuvre, les deux extrémités des conduits de lumière 10 et 12 du tricoupleur 8 sont munies à leur entrée dans la spirale de deux zones élargies en forme d'entonnoir 70 et 72 (en terminologie anglo-saxonne "tapers"). Ces élargissements en début et en fin de spirale 2 permettent de réaliser un virage plus serré du guide optique sans qu'il y ait pour autant addition de pertes de propagation corrélative.

En pratique, les microguides du tricoupleur 6 sont monomodes. La présence de zones d'élargissement 70 et 72 permet d'utiliser des guides multimodes après l'entrée dans la spirale 2 avec des largeurs de l'ordre de 6 à 15 micromètres, alors que les largeurs courantes au niveau du tricoupleur 6 pour les guides 10, 12 et 14, sont de l'ordre de 3 à 6 micromètres. Le fait que les microguides soient multimodes dans la spirale, n'est pas gênant car la courbure de ces derniers joue le rôle de filtre de mode ; de plus, si l'entrée et la sortie de chaque élargissement 70 et 72 est suffisamment progressive quant aux courbures utilisées (ceci est réalisé par exemple par une longueur d'élargissement de l'ordre de 20 à 1200 micromètres) il y a très peu de conversion du mode principal vers les modes d'ordre supérieur.

## Revendications

1. Gyromètre optique à effet Sagnac comportant une sonde constituée d'une boucle optique en forme de spirale plane (2) réalisé à l'aide de circuits optiques intégrés sur un substrat, comportant des guides de lumière pour la progression de deux ondes lumineuses en provenance d'une source de lumière (20) et parcourant la spirale en sens inverse l'une de l'autre, les deux extrémités (10, 12) des guides de la spirale étant en liaison avec des moyens d'introduction (14) des deux ondes lumineuses dans la spirale et de détection (16, 18) de chacune d'elles à leur sortie de la spirale (2), caractérisé en ce que la liaison des extrémités (10, 12) des guides de lumière avec la source de lumière (20) et les moyens de détection (16, 18) sont réalisés par un tricoupleur (8) à trois guides rectilignes parallèles, dont le guide central (14) est relié à la source de lumière (20) et dont les deux guides (10, 12) latéraux sont reliés chacun à un détecteur (16, 18), les caractéristiques du tricoupleur (8) étant choisies de façon à produire entre les deux ondes lumineuses qui parcourent la boucle optique l'équivalent d'un déphasage au repos aussi voisin que possible de $\pi/2$, en ce que le tricoupleur est intégré sur le même substrat que la spirale et en ce que le guide central (14) du tricoupleur (8) est muni, à son extrémité opposée à la source de lumière, d'une structure absorbante (26) pour contrôler et/ou éliminer la lumière guidée résiduelle à la sortie de ce guide central.

2. Gyromètre selon la revendication 1, caractérisé en ce que le franchissement (25) des spires de la boucle par l'une des deux extrémités des guides de la spirale (2) est réalisé, en optique intégrée, par croisement direct des guides de lumières dans le plan de la boucle elle-même, les angles de croisement des différents guides étant, de préférence, supérieurs à 10°.

3. Gyromètre selon la revendication 1, caractérisé en ce que les guides d'ondes lumineuses ont une couche guidante réalisée en niobate de lithium $LiNbO_3$, éventuellement dopé avec du titane ou ayant subi un échange protonique.

4. Gyromètre selon la revendication 1, caractérisé en ce que les guides d'ondes lumineuses ont une couche guidante en verre dont l'indice a été modifié par échange d'ions.

5. Gyromètre selon la revendication 1, caractérisé en ce que la structure guidante appartient à l'une des structures $Si/SiO_2/Si_3N_4/SiO_2$, dans laquelle $Si_3N_4$ peut être remplacé par $SiON$ ou $Al_2O_3$, et $Si/SiO_2/SiO_2$ dopée$/SiO_2$.

6. Gyromètre selon la revendication 1, caractérisé en ce que le franchissement des spires de la boucle (2) par l'une des deux extrémités des guides de la spirale est réalisé sous forme d'un passage supérieur (ou inférieur) à la façon d'un pont, par superposition de deux structures guidantes croisées dont la structure inférieure, constituée par la spirale elle-même, est couplée optiquement à la structure supérieure de franchissement par l'intermédiaire de deux coupleurs situés sur l'extrémité d'entrée (ou de sortie) respectivement de part et d'autre des guides d'ondes de la spirale.

7. Gyromètre selon la revendication 6, caractérisé en ce que les deux structures guidantes sont identiques et les deux coupleurs (29, 31) sont des coupleurs simples.

8. Gyromètre selon la revendication 6, caractérisé en ce que les deux structures guidantes sont différentes et les deux coupleurs (29, 31) comportent des réseaux (47, 49).

9. Gyromètre selon la revendication 1, caractérisé en ce que les guides de lumière de la spirale (2) sont rendus optiquement indépendants les uns des autres par une structure absorbante située soit entre les guides de la spirale et de part et d'autre de celle-ci, soit sur l'ensemble de la spirale.

10. Gyromètre selon l'une quelconque des revendications 1 à 9 précédentes, caractérisé en ce que la source de lumière (20) est une source à faible longueur de cohérence.

11. Gyromètre selon la revendication 10, caractérisé en ce que la source de lumière (20) est une diode superradiante.

12. Gyromètre selon l'une quelconque des revendications 1 à 11 précédentes, caractérisé en ce que le guide central du tricoupleur (14) comporte, après la source de lumière (20), l'un au moins des deux moyens compris dans le groupe comprenant un polariseur (24) et un filtre spatial (22) pour sélectionner un mode guidé.

13. Gyromètre selon l'une quelconque des revendications 1 à 12 précédentes, caractérisé en ce que la partie des guides de lumière de la spirale (2) comportant le point milieu M de celle-ci et éventuellement tout ou partie des guides de lumière situés de part et d'autre du point milieu sont réalisées par des portions (68) de guides rectilignes.

14. Gyromètre selon l'une des revendications 1 à 13 précédentes, caractérisé en ce que les guides comportent, aux extrémités de la spirale (10, 12), et après la sortie du tricoupleur (8), un élargissement (72) en forme d'entonnoir pour augmenter la largeur des guides de la spirale.

**Patentansprüche**

1. Optischer Kreisel bzw. Gyrometer des Typs Sagnac mit einer Sonde, gebildet durch eine optische Schleife mit der Form einer ebenen bzw. flachen Spirale (2), hergestellt mit Hilfe von auf einem Substrat integrierten optischen Kreisen, Lichtleiter für die Progression bzw. Fortpflanzung von zwei aus einer Lichtquelle (20) stammenden und die Spirale in entgegengesetzten Richtungen durchlaufenden Lichtwellen umfassend, wobei die beiden Enden (10, 12) der Leiter der Spirale in Verbindung sind mit Einrichtungen zur Einspeisung (14) der beiden Lichtwellen in die Spirale und der Detektion (16, 18) von jeder von ihnen bei ihrem Austritt aus der Spirale (2), **dadurch gekennzeichnet**,
daß die Verbindung der Enden (10, 12) der Lichtleiter mit der Lichtquelle (20) und den Detektionseinrichtungen (16, 18) realisiert werden durch einen Tripelkoppler bzw. Dreifachkoppler (8) mit drei geradlinigen parallelen Leitern, von denen der mittlere Leiter (14) mit der Lichtquelle (20) verbunden ist und jeder der beiden seitlichen Leiter (10, 12) mit einem Detektor (16, 18) verbunden ist, wobei die Kennwerte des Dreifachkopplers (8) so gewählt werden, daß sie zwischen den beiden Lichtwellen, die die optische Schleife durchlaufen, bei Ruhe das Äquivalent einer Phasenverschiebung von so nahe wie möglich $\pi/2$ herzustellen, dadurch, daß der Dreifachkoppler auf demselben Substrat integriert ist wie die Spirale, und dadurch, daß der mittlere Leiter (14) des Dreifachkopplers (8) an seinem der Lichtquelle entgegengesetzten Ende mit einer absorbierenden Struktur (26) versehen ist, um das Restlicht am Ausgang dieses mittleren Leiters zu kontrollieren und/oder zu eliminieren.

2.  Gyrometer nach Anspruch 1, dadurch gekennzeichnet, daß das Kreuzen (25) der Windungen der Schleife durch eines der beiden Enden der Leiter der Spirale (2) in integrierter Optik realisiert wird durch direktes Kreuzen der Lichtleiter in der Ebene der Schleife selbst, wobei die Kreuzungswinkel der verschiedenen Leiter vorzugsweise größer als 10° sind.

3.  Gyrometer nach Anspruch 1, dadurch gekennzeichnet, daß die Lichtwellenleiter eine Leiterschicht aus Lithium-Niobat $LiNbO_3$ haben, eventuell mit Titan dotiert oder einem Protonenaustausch unterzogen.

4.  Gyrometer nach Anspruch 1, dadurch gekennzeichnet, daß die Lichtwellenleiter eine Leiterschicht aus Glas haben, dessen Index bzw. Brechzahl durch Ionenaustausch modifiziert wurde.

5.  Gyrometer nach Anspruch 1, dadurch gekennzeichnet, daß die Leiterstruktur zu einer der Strukturen $Si/SiO_2/Si_3N_4/SiO_2$ gehört, wobei $Si_4N_4$ ersetzt werden kann durch SiON oder $Al_2O_3$, und Si/$SiO_2$ dotiert/$SiO_2$.

6.  Gyrometer nach Anspruch 1, dadurch gekennzeichnet, daß das Kreuzen der Windungen der Schleife (2) durch eines der Enden der Leiter der Spirale in Form einer Überführung (oder Unterführung) nach Art einer Brücke realisiert wird, durch Überlagerung von zwei gekreuzten Leiterstrukturen, von denen die untere Struktur, gebildet durch die Spirale selbst, mit der oberen Kreuzungsstruktur optisch gekoppelt ist durch zwei Koppler, die sich an dem jeweiligen Eingangsende (oder Ausgangsende) beiderseits der Wellenleiter der Spirale befinden.

7.  Gyrometer nach Anspruch 6, dadurch gekennzeichnet, daß die beiden Leiterstrukturen identisch sind und die beiden Koppler (29, 31) einfache Koppler sind.

8.  Gyrometer nach Anspruch 6, dadurch gekennzeichnet, daß die beiden Leiterstrukturen verschieden sind und die beiden Koppler (29, 31) Gitter (47, 49) umfassen.

9.  Gyrometer nach Anspruch 1, dadurch gekennzeichnet, daß die Lichtleiter der Spirale (2) optisch voneinander unabhängig gemacht werden durch eine absorbierende Struktur, die sich entweder zwischen den Leitern der Spirale und beiderseits von diesen befindet, oder auf der Gesamtheit der Spirale.

10. Gyrometer nach einem der Ansprüche 1 bis 9, dadurch gekennzeichnet, daß die Lichtquelle (20) eine Quelle mit geringer Kohärenzlänge ist.

11. Gyrometer nach einem der Ansprüche 10, dadurch gekennzeichnet, daß die Lichtquelle (20) eine superstrahlende Diode ist.

12. Gyrometer nach einem der Ansprüche 1 bis 11, dadurch gekennzeichnet, daß der mittlere Leiter des Dreifachkopplers (14) nach der Lichtquelle (20) wenigstens eine der beiden Einrichtungen umfaßt, die enthalten sind in der Gruppe, die einen Polarisator (24) und ein räumliches Filter (22) zum Auswählen einer geleiteten Schwingungsart (mode guide) enthält.

13. Gyrometer nach einem der Ansprüche 1 bis 12, dadurch gekennzeichnet, daß der Teil der Lichtleiter der Spirale (2), der den Mittel- bzw. Mittenpunkt M von dieser enthält, und eventuell alle oder ein Teil der Lichtleiter, die sich beiderseits des Mittenpunkts befinden, realisiert werden durch geradlinige Leiterteilstücke (68).

14. Gyrometer nach einem der Ansprüche 1 bis 13, dadurch gekennzeichnet, daß die Leiter an den Enden der Spirale (10, 12) und nach dem Ausgang des Dreifachkopplers (8) eine trichterförmige Ausweitung (72) umfassen, um die Breite der Leiter der Spirale zu vergrößern.

**Claims**

1. Sagnac effect optical gyrometer comprising a probe constituted by an optical loop in the form of a planar spiral (2) produced with the aid of optical circuits integrated on a substrate, having light guides for the propagation of two light waves from a light source (20) and traversing the spiral in opposite directions, the two ends (10, 12) of the guides of the spiral being connected to means (14) for the introduction of two light waves in the spiral and means (16, 18) for the detection of each of them when they leave the spiral (2), characterized in that the connection between the ends (10, 12) of the light guides and the light source (20) and the detection means (16, 18) being brought about by a tricoupler (8) having three parallel, rectilinear guides integrated on the same substrate as the spiral and whose central guide (14) is connected to the light source (20) and whose two lateral guides (10, 12) are in each case connected to a detector (16, 18), the characteristics of the tricoupler (8) being chosen in such a way as to produce between the two light waves traversing the optical loop the equivalent of a phase shift in the inoperative position which is as close as possible to $\pi/2$, in that the tricoupler is integrated on the same substrate as the spiral and in that the central guide (14) of the tricoupler (8) is provided, at its end opposite to the light source, with an absorbent structure (26) for checking and/or eliminating the residual guided light on leaving said central guide.

2. Gyrometer according to claim 1, characterized in that the clearing (25) of the turns of the loop by one of the two ends of the guides of the spiral (2) is brought about, in integrated optics, by direct crossing of the light guides in the plane of the loop, the crossing angles of the different guides preferably exceeding 10°.

3. Gyrometer according to claim 1, characterized in that the light waveguides have a guiding coating made from lithium niobate $LiNbO_3$, optionally doped with titanium, or which has undergone a proton exchange.

4. Gyrometer according to claim 1, characterized in that the light waveguides have a guiding coating made from glass, whose index has been modified by ion exchange.

5. Gyrometer according to claim 1, characterized in that the guiding structure belongs to one of the structures $Si/SiO_2/Si_3N_4/SiO_2$, in which $Si_3N_4$ can be replaced by SiON or $Al_2O_3$, and $Si/SiO_2$/doped $SiO_2/SiO_2$,

6. Gyrometer according to claim 1, characterized in that the clearing of the turns of the loop (2) by one of the two ends of the guides of the spiral takes place in the form of an upper or lower passage in the manner of a bridge, by superimposing two crossed, guiding structures, whereof the lower structure constituted by the actual spiral is optically coupled to the upper clearing structure by means of two couplers located on the entrance or exit end respectively on either side of the waveguides of the spiral.

7. Gyrometer according to claim 6, characterized in that the two guiding structures are identical and the two couplers (29, 31) are single couplers.

8. Gyrometer according to claim 6, characterized in that the two guiding structures are different and the two couplers (29, 31) incorporate gratings (47, 49).

9. Gyrometer according to claim 1, characterized in that the light guides of the spiral (2) are made optically independent of one another by an absorbent structure located either between the guides of the spiral and on either side thereof, or on the complete spiral.

10. Gyrometer according to any one of the claims 1 to 9, characterized in that the light source (20) is a source having a limited coherence length.

11. Gyrometer according to claim 10, characterized in that the light source (20) is a superradiant diode.

12. Gyrometer according to any one of the claims 1 to 11, characterized in that the central guide of the tricoupler (14) has, following the light source (20), at least one of the two means within the group including a polarizer (24) and a spatial filter (22) for selecting a guided mode.

13. Gyrometer according to any one of the claims 1 to 12, characterized in that the part of the light guide of the spital (2) having its centre point M and optionally all or part of the light guides located on either side of the centre point are formed by portions (68) of rectilinear guides.

14. Gyrometer according to any one of the claims 1 to 13, characterized in that the light guides have, at the ends of the spiral (10, 12) and following the exit from the tricoupler (8), a funnel-shaped widened portion (72) for increasing the width of the guides of the spiral.

FIG. 1a

FIG. 2a

FIG. 1

FIG. 2

FIG. 3

FIG. 4

FIG. 5

FIG. 6

FIG. 7

FIG. 7a

FIG. 7b

FIG. 7c

FIG. 7d

FIG. 7e

FIG. 7f

FIG. 7g

FIG. 8

FIG. 8a

FIG. 8b

FIG. 8c

FIG. 8d

FIG. 8e

FIG. 8f

FIG. 9

8    60

36    SiO₂    $h'$    $h$

Type 2    34    32    SiO₂
OIS1    30

FIG. 10

40    60

Type 2    SiO₂    $h$
OIS2    38    SiO₂ HI

32    SiO₂

30    Si

38    40

60    SiO₂

SiO₂
HI

32    SiO₂

30    FIG. 11

40

38    60

SiO₂

32

30    FIG. 12

FIG. 13

FIG. 14

FIG. 15

FIG. 16

FIG. 17

FIG. 18